# FASCICULE DE BREVET EUROPEEN

(11) **EP 2 214 941 B1**
(45) Date de publication et mention de la délivrance du brevet: **15.05.2013**
(21) Numéro de dépôt: 08844113.4
(22) Date de dépôt: 30.10.2008
(51) Int. Cl.: B60T 8/88, B60T 7/04, B60T 7/06, B60K 26/02, B60W 50/02

(54) **SYSTEME DE DETERMINATION D'UNE CONSIGNE ASSOCIEE A LA POSITION D'UNE PEDALE D'UN VEHICULE AUTOMOBILE**
SYSTEM ZUR BESTIMMUNG EINES SOLLWERTES FÜR DIE POSITION EINES PEDALS IN EINEM AUTOMOBIL
SYSTEM FOR DETERMINING A SETPOINT ASSOCIATED WITH THE POSITION OF A PEDAL IN AN AUTOMOBILE

(30) Priorité: 30.10.2007 FR 0758708
(43) Date de publication de la demande: 11.08.2010
(73) Titulaire: Renault s.a.s., 92100 Boulogne-Billancourt (FR)
(72) Inventeur: DANG VAN NHAN, Christophe, F-94800 Villejuif (FR)
(86) Numéro de dépôt international: PCT/FR2008/051958
(87) Numéro de publication internationale: WO 2009/056772

(56) Documents cités:
- WO-A-01/14195
- DE-A1- 19 510 522
- DE-A1-102006 017 302

## Description

### DOMAINE DE L'INVENTION

La présente invention a trait au domaine de la génération de consignes dans un véhicule automobile à commande électronique.

Plus particulièrement, la présente invention concerne la génération d'une consigne de freinage à partir d'une pédale actionnée par un conducteur, ladite pédale étant découplée des freins eux-mêmes. Un tel découplage est plus connu sous l'expression anglo-saxonne de « brake-by-wire ».

### ETAT ANTERIEUR DE LA TECHNIQUE

Dans un freinage à commande électronique, la consigne de freinage reçue du conducteur est déterminée au moyen d'un système de mesure d'une grandeur liée à l'enfoncement de la pédale de frein (position de la pédale, course de l'enfoncement, effort d'appui, ou autres).

Pour des raisons évidentes de sécurité, ce système de mesure doit continuer de fonctionner même lorsqu'il présente des défaillances. Il a donc été prévu des systèmes dans lesquels la mesure est effectuée par plusieurs capteurs afin d'assurer une redondance et ainsi éviter que la panne d'un seul capteur ne mette le système hors service.

Le document WO 2001/62569 propose un système de mesure comprenant deux capteurs mesurant la position de la pédale de frein. Toutefois, ce système n'est tolérant à la défaillance d'un de ces capteurs uniquement dans le cas où il est possible de déterminer avec certitude lequel de ces capteurs est effectivement en panne. En effet, si les capteurs délivrent des mesures discordantes, il est difficile sans autre information de déterminer lequel est effectivement défaillant.

Le document GB 2 332720 propose un système de mesure comprenant trois capteurs mesurant la position de la pédale de frein afin de lever l'incertitude sur l'identité d'un capteur défaillant. En effet, en présence d'une panne de capteur, il reste deux capteurs dont les mesures sont concordantes de sorte que le système peut continuer de fonctionner. Toutefois, on retrouve la même incertitude lorsque deux capteurs sont défaillants puisqu'il n'est pas possible de déterminer lequel continue de fonctionner normalement. Par ailleurs, le principal inconvénient de ce système réside dans son coût élevé.

Un système de détermination d'une consigne associée à la position d'une pédale d'un véhicule automobile selon le préambule de la revendication 1 est connu de WO 01 14195 A.

### EXPOSE DE L'INVENTION

Le but de la présente invention est de résoudre le problème susmentionné en proposant un système de détermination d'une consigne associée à la position d'une pédale d'un véhicule automobile peu onéreux et permettant un diagnostic de fiabilité accrue lorsqu'un ou plusieurs de ses éléments sont défaillants.

A cet effet, l'invention a pour objet un système de détermination d'une consigne associée à la position d'une pédale d'un véhicule automobile, du type comportant deux capteurs mesurant chacun une grandeur associée à ladite position. Le système comporte des moyens commutant entre des premier et second états sur une position de commutation prédéterminée de la pédale; et des moyens de génération de la consigne en fonction des mesures des deux capteurs et de l'état courant des moyens commutant., les moyens de génération sont aptes à sélectionner la mesure correspondant à la plus petite des positions de pédale lorsque les moyens commutant sont dans leur premier état, et la mesure correspondant à la plus grande des positions de pédale lorsque les moyens commutant sont dans leur second état.

En d'autres termes, il existe grâce aux moyens commutant une troisième information concernant la position réelle de la pédale vis-à-vis d'une position prédéterminée, permettant de tester la cohérence des mesures délivrées par les capteurs. Cette information simple ne nécessite pas d'être produite par un capteur mais par exemple par un élément à interrupteur moins coûteux.

En outre, la comparaison des mesures de deux capteurs avec l'état des moyens de commutation permet de diagnostiquer la défaillance de l'un, voir des deux capteurs, ainsi que la défaillance des moyens commutant eux-mêmes.

Le système selon l'invention comporte en outre des moyens de diagnostic de l'état de fonctionnement des deux capteurs et des moyens commutant en fonction de signaux délivrés par ceux-ci ;
les moyens de diagnostic sont aptes à diagnostiquer un capteur défaillant et que lui
seul est défaillant si à la fois :
■ l'écart entre les positions correspondant aux mesures des deux capteurs est supérieur à une première valeur de seuil prédéterminée ; et
■ lorsque les moyens de commutation sont dans leur état indiquant une position de pédale supérieure à la position de commutation, la position correspondant à la mesure du capteur est inférieure à la position de commutation d'au moins une seconde valeur de seuil prédéterminée et la position correspondant à la mesure de l'autre capteur est supérieure à la position de commutation d'au moins une troisième valeur de seuil prédéterminé, ou, lorsque les moyens de commutation sont dans leur état indiquant une position de pédale inférieure à la position de commutation, la position correspondant à la mesure du capteur est supérieure à la position de commutation d'au moins une troisième valeur de seuil prédéterminée et la position correspondant à la mesure de l'autre capteur est inférieure à la position de commutation d'au moins la seconde valeur de seuil prédéterminée.

Selon des modes de réalisation particuliers de l'invention, le système comporte une ou plusieurs des caractéristiques suivantes :
■ la pédale est une pédale de frein, et en ce que le premier état est activé pour des positions de pédale inférieures à la position de commutation, et le second état est activé pour des positions de pédale supérieures à la position de commutation ;
■ les moyens de diagnostic sont aptes à diagnostiquer que les moyens commutant sont défaillants et que eux seuls sont défaillants si à la fois :
   ■ l'écart entre les positions correspondant aux mesures des deux capteurs est inférieur à une première valeur de seuil prédéterminée ; et
   ■ lorsque les moyens de commutation sont dans leur état indiquant une position de pédale supérieure à la position de commutation, les positions correspondant aux mesures des capteurs sont inférieures à la position de commutation d'au moins une seconde valeur de seuil prédéterminée, ou, lorsque les moyens de commutation sont dans leur état indiquant une position de pédale inférieure à la position de commutation, les positions correspondants aux mesures des capteurs sont supérieures à la position de commutation d'au moins une troisième valeur de seuil prédéterminée.
■ les moyens de diagnostic sont aptes à diagnostiquer une double défaillance ou une incohérence totale entre les signaux délivrés par les capteurs et les moyens commutant si à la fois :
   ■ l'écart entre les positions correspondant aux mesures des deux capteurs est supérieur à une première valeur de seuil prédéterminé ; et
   ■ lorsque les moyens de commutation sont dans leur état indiquant une position de pédale supérieure à la position de commutation, les positions correspondant aux mesures des capteurs sont inférieures à la position de commutation d'au moins une seconde valeur de seuil prédéterminée, ou, lorsque les moyens de commutation sont dans leur état indiquant une position de pédale inférieure à la position de commutation, les positions correspondants aux mesures des capteurs sont supérieures à la position de commutation d'au moins une troisième valeur de seuil prédéterminée.
■ les moyens de génération de consigne sont aptes à déclencher des modes dégradés de consigne en cas de défaillance des capteurs et des moyens commutant ;
■ la pédale est une pédale de frein, et lorsque seul un capteur est diagnostiqué comme étant défaillant, les moyens de génération de consigne sont aptes à sélectionner le maximum entre la position correspondant à la mesure de l'autre capteur et la position de commutation ;
■ la pédale est une pédale de frein, et lorsque seuls les moyens commutant sont diagnostiqués comme étant défaillants, les moyens de génération sont aptes à sélectionner le maximum des positions correspondant aux mesures des deux capteurs ; et
■ la pédale est une pédale de frein, et lorsqu'au moins deux éléments parmi les moyens commutant et les deux capteurs sont diagnostiqués comme étant défaillants, les moyens de génération de consigne sont aptes à sélectionner le maximum entre les positions correspondant aux mesures des deux capteurs et la position de commutation.

### BREVE DESCRIPTION DES FIGURES

La présente invention sera mieux comprise à la lecture de la description qui va suivre, donnée uniquement à titre d'exemple, et faite en relation avec les dessins annexés, dans lesquels des références identiques désignent des éléments identiques ou analogues, et dans lesquels:
- la figure 1 est une vue schématique d'un système selon l'invention associé à une pédale de frein d'un véhicule automobile équipé d'un système de freinage à commande électronique ;
- la figure 2 est une vue schématique d'une premier mode de réalisation de l'unité de consigne de la figure 1 ;
- la figure 3 est une vue schématique d'un second mode de réalisation de l'unité de consigne de la figure 1
- la figure 4 est un tracé illustrant des tolérances dans un diagnostic de défaillance des capteurs et de l'interrupteur du système de la figure 1 ; et
- la figure 5 est une vue schématique d'un troisième mode de réalisation de l'unité de consigne de la figure 1.

### DESCRIPTION DETAILLEE DE L'INVENTION

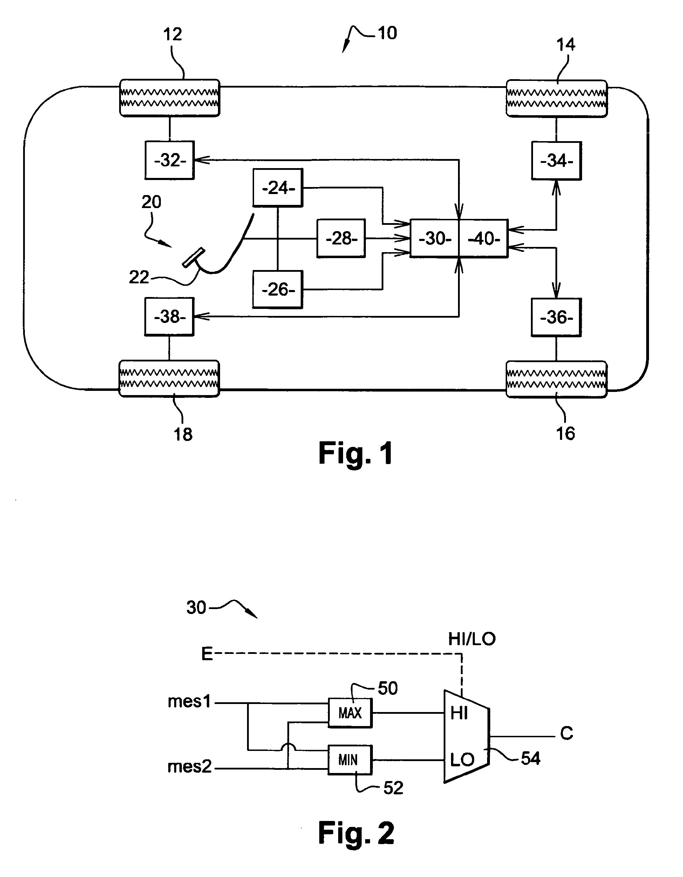

Sur la figure 1, un véhicule automobile 10 à quatre roues 12, 14, 16, 18 comporte un système de freinage par commande électronique 20.

Le système de freinage 20 comporte une pédale de frein 22, actionnée par le conducteur du véhicule 10, deux capteurs 24, 26 mesurant la position de la pédale de frein 22, et un module à interrupteur 28.

Le module 28 comporte un interrupteur fermant un circuit lorsque la position de la pédale de frein est supérieure à une valeur prédéterminée, ci-après désignée « position de commutation ». Le module 28 délivre ainsi une première valeur basse « LO » lorsque la position de la pédale de frein est inférieure à la position de commutation, et une seconde valeur élevée « HI » lorsque la position de la pédale de frein est supérieure à la position de commutation. Par exemple, le module 28 est du type contacteur pour l'allumage des feux de stop de véhicule, tel que décrit dans le brevet US 1 750 279.

Le système de freinage 20 comporte également une unité 30 de consigne de freinage, connectée aux capteurs 24, 26 et au module à interrupteur 28. L'unité 30 génère une consigne de freinage en fonction des sorties de ceux-ci, comme cela sera expliqué plus en détail par la suite.

Enfin, le système de freinage 20 comporte des dispositifs 32, 34, 36, 38 de freinage des roues 12, 14, 16, 18 ainsi qu'une unité 40 de commande de ceux-ci. L'unité de commande 40 est connectée au module 30 de génération de consigne de freinage et commande les dispositifs 32, 34, 36, 38 en fonction de la consigne délivrée par celui-ci. Les dispositifs 32, 34, 36, 38 et l'unité de commande 40 sont classiques et ne seront pas décrits plus en détail pour des raisons de concision.

La figure 2 est une vue schématique d'un premier mode de réalisation de l'unité 30 de consigne de freinage.

L'unité 30 comporte, dans ce mode de réalisation, des premiers et seconds moyens de sélection 50, 52 connectés aux capteurs 24, 26, les premiers moyens 50 sélectionnant le maximum parmi les mesures mes1, mes2 des deux capteurs, et les seconds moyens 52 sélectionnant le minimum parmi les mesures mes1, mes2.

L'unité 30 comporte également des, troisièmes moyens de sélection 54 connectés au module à interrupteur 28 et aux premiers et seconds moyens 50, 52 et générant la consigne de freinage C. Les troisièmes moyens de sélection 54 sélectionnent une sortie de ceux-ci en fonction de la valeur E délivrée par le module à interrupteur 28. Plus particulièrement, les troisièmes moyens 54 sélectionnent la sortie des premiers moyens 50 lorsque la valeur E délivrée par le module à interrupteur 28 est la valeur « HI » et la sortie des seconds moyens 52 lorsque la valeur E délivrée par le module à interrupteur 28 est la valeur « LO ».

La logique de génération de consigne suivant est ainsi mise en oeuvre par l'unité 30 :
■ lorsque le module à interrupteur 28 indique que la pédale de frein est en position « très appuyée » (valeur E=« HI »), la consigne de freinage C est égale à la plus grande des mesures délivrées par les capteurs 24, 26 ; et
■ lorsque le module 28 indique que la pédale de frein est en position « peu ou pas appuyée » (valeur E=« LO »), la consigne de freinage C est égale à la plus petite des mesures délivrées par les capteurs 24, 26.

Ainsi, si l'un des deux capteurs est défaillant en figeant sa mesure à une valeur inférieure à la position de commutation du module à interrupteur 28, alors :
■ lorsque le module à interrupteur 28 indique que la pédale de frein est en position « très appuyée », la consigne de freinage C suit le maximum des mesures, et donc celle du capteur non défaillant ; et
■ lorsque le module 28 indique que la pédale de frein est en position « peu ou pas appuyée », la consigne de freinage C suit le minimum des mesures, ce qui permet toujours de pouvoir arrêter de freiner. Il peut cependant résulter un freinage inférieur à la volonté du conducteur dans la zone comprise entre la position de commutation du module à interrupteur 28 et la valeur à laquelle est figée la mesure du capteur défaillant. Cependant ceci est aisément maîtrisable par le conducteur en appuyant un peu plus sur la pédale de frein, réflexe naturel observé en cas de sous-freinage, afin de se faire basculer le module à interrupteur dans l'état « très appuyée ».

De manière analogue, si l'un des deux capteurs est défaillant en figeant sa mesure à une valeur supérieure à la position de commutation du module à interrupteur 28, alors :
■ lorsque le module 28 indique que la pédale de frein est en position « peu ou pas appuyée », la consigne de freinage C suit le minimum des mesures, et donc celle du capteur non défaillant ; et
■ lorsque le module à interrupteur 28 indique que la pédale de frein est en position « très appuyée », la consigne de freinage C suit le maximum des mesures, ce qui permet de toujours disposer du freinage maximum. Il peut cependant résulter un freinage supérieur à la volonté du conducteur dans la zone comprise entre la position de commutation du module à interrupteur 28 et la valeur à laquelle est figée la mesure du capteur défaillant. Cependant ceci est aisément maîtrisable par le conducteur en levant le pied de la pédale de frein, réflexe naturel observé en cas de sur-freinage, afin de se faire basculer le module à interrupteur dans l'état « peu ou pas appuyé ».

Par ailleurs, si le module à interrupteur est lui-même défaillant, par exemple il ne commute plus entre ces deux valeurs « HI » et « LO » ou bien il commute sur une mauvaise position de commutation, la consigne de freinage suit alternativement le maximum et le minimum des deux mesures de position. Comme ces deux valeurs sont sensiblement égales pour des capteurs non défaillants, aux tolérances près, la consigne de freinage reste correcte.

On remarque ainsi que la défaillance d'un capteur n'induit pas la mise hors service de la génération de consigne de freinage. En outre, un niveau élevé de sécurité est préservé même dans une telle situation.

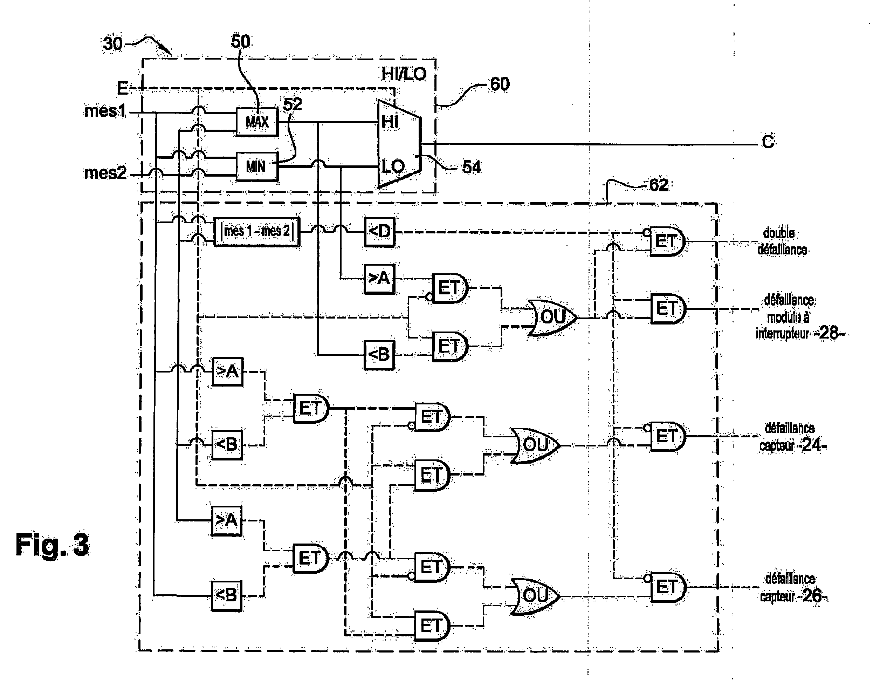

Dans un deuxième mode de réalisation de l'unité 30 illustré à la figure 3, un diagnostic de l'état de fonctionnement des deux capteurs 24, 26 et du module à interrupteur 28 est mis en outre en oeuvre en fonction de signaux délivrés par ceux-ci.

L'unité 30 de consigne comporte un module 60 de génération de consigne, constitué des moyens de sélection 50, 52 et 54 décrits en relation avec le mode de réalisation de la figure 1, et un module 62 de diagnostic du fonctionnement des capteurs 24, 26 et du module à interrupteur 28.

Le module 62 met en oeuvre la stratégie de diagnostic suivante, avec A, B et D des paramètres prédéterminés positifs prenant en compte des dispersions de comportement (tolérance de fabrication, usure, etc...) que présentent immanquablement des dispositifs physiques.

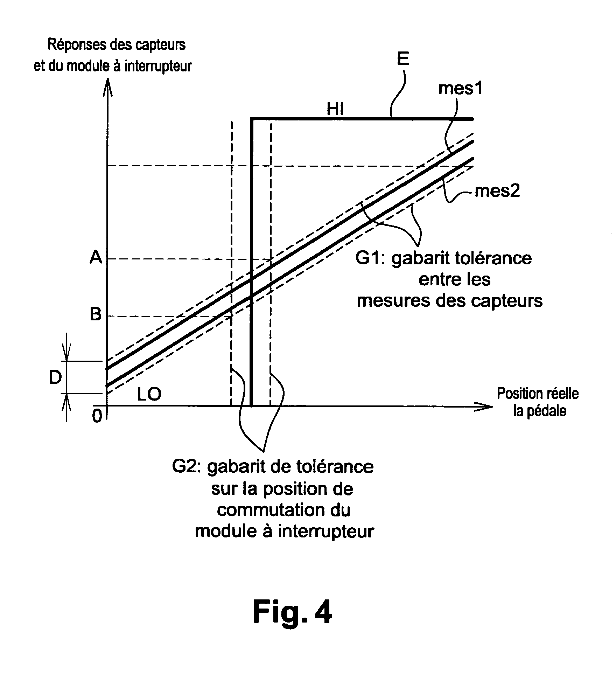

Plus particulièrement, en se référant à la figure 4 qui illustre la réponse des deux capteurs 24, 26 et du module à interrupteur 28 en fonction de la position réelle de la pédale de frein, il est tracé un premier gabarit de tolérance G1 dans lequel il est attendu les mesures mes1 et mes2 des deux capteurs 24, 26 lorsque ceux-ci fonctionnent normalement, et un second gabarit de tolérance G2 dans lequel il est attendu la position de commutation réelle du module à interrupteur 28 lorsque celui-ci fonctionne normalement.

De ces deux gabarits G1, G2, on en déduit les paramètres A, B, D. Plus particulièrement :
■ le paramètre D est la différence entre la limite haute et la limite basse du premier gabarit G1. Ce paramètre est donc un écart maximal acceptable entre les mesures mes1, mns2 de deux capteurs 24, 26 lorsqu'ils sont non défaillants. Le paramètre D définit ainsi un seuil d'accord ou de désaccord entre ces mesures ;
■ le paramètre A est le point d'intersection entre les limites hautes des deux gabarits G1 et G2. Ce paramètre est donc une valeur de position au-delà de laquelle il est considéré que les deux capteurs 24, 26 et le module à interrupteurs 28 renvoient des valeurs cohérentes si aucun d'entre eux n'est défaillant ; et
■ le paramètre B est le point d'intersection entre les limites basses des deux gabarits G1 et G2. Ce paramètre est donc une valeur de position en deçà de laquelle il est considéré que les deux capteurs 24, 26 et le module à interrupteur 28 renvoient des valeurs cohérentes si aucun d'entre eux n'est défaillant.

Une défaillance du seul capteur 24 est ainsi diagnostiquée par le module 62 si :

```
 (l'écart entre les mesures des capteurs est supérieur à D)
 ET
 (
       (
           (le module à interrupteur 28 indique que la pédale de frein est en position
           « peu ou pas appuyée »)
           ET
           (la mesure du capteur 24 est supérieure à A)
           ET
           (la mesure du capteur 26 est inférieure à B)
       )
       OU
       (
           (le module à interrupteur 28 indique que la pédale de frein est en position
           « très appuyée »)
           ET
           (la mesure du capteur 24 est inférieure à B)
           ET
           (la mesure du capteur 26 est supérieure à A)
       )
 )
```

De manière analogue, une défaillance du seul capteur 26 est diagnostiquée par le module 62 si :

```
 (l'écart entre les mesures des capteurs est supérieur à D)
 ET
 (
       (
           (le module à interrupteur 28 indique que la pédale de frein est en position
           « peu ou pas appuyée »)
           ET
           (la mesure du capteur 24 est inférieure à B)
           ET
           (la mesure du capteur 26 est supérieure à A)
       )
       OU
       (
           (le module à interrupteur 28 indique que la pédale de frein est en position
           « très appuyée »)
           ET
           (la mesure du capteur 24 est supérieure à A)
           ET
           (la mesure du capteur 26 est inférieure à B)
       )
 )
```

Par ailleurs, une défaillance du seul module à interrupteur 28 est diagnostiquée par le module 62 si :

```
 (l'écart entre les mesures des capteurs est inférieur à D)
 ET
 (
       (
           (le module à interrupteur 28 indique que la pédale de frein est en position
           « peu ou pas appuyée »)
           ET
           (les mesures des deux capteurs 24, 26 sont supérieures à A)
       OU
       (
           (le module à interrupteur 28 indique que la pédale de frein est en position
           « très appuyée »)
           ET
           (les mesures des deux capteurs 24, 26 sont inférieures à B)
       )
 )
```

Enfin une double défaillance ou une incohérence totale entre les signaux délivrés par les capteurs 24, 26 et le module à interrupteur 28 est diagnostiquée par le module 62 si :

```
 (l'écart entre les mesures des deux capteurs est supérieur à D)
 ET
 (
       (
           (le module à interrupteur 28 indique que la pédale de frein est en position
           « peu ou pas appuyée »)
           ET
           (les mesures des deux capteurs 24, 26 sont supérieures à A)
       )
       OU
       (
           (le module à interrupteur 28 indique que la pédale de frein est en position « très
           appuyée »)
           ET
           (les mesures des deux capteurs 24, 26 sont inférieures à B)
       )
 )
```

Le module 62 est connecté à des moyens d'alerte du conducteur (non représentés), comme par exemple un écran d'affichage, un témoin lumineux, un avertisseur sonore ou autres, pour avertir le conducteur des défaillances diagnostiquées.

Comme on peut le constater, le diagnostic des défaillances des capteurs 24, 26 et du module à interrupteur 28 tient compte des dispersions généralement observées dans le fonctionnement de ceux-ci.

De part ces dispersions, lorsqu'au moins un des signaux délivrés par les capteurs 24, 26 et lu module 28 se situe entre les valeurs A et B, il est existe une incertitude qui rend les tests de cohérence entre ces signaux inefficaces. Il se peut ainsi qu'une défaillance ne soit pas instantanément détectée.

Ceci n'est toutefois pas pénalisant dans la mesure où le conducteur agit sur la pédale de manière régulière et selon diverses configurations (relâchement de la pédale ou freinage pour arrêt notamment), de sorte que régulièrement l'ensemble des signaux des capteurs 24, 26 et du module à interrupteur 28 se situent hors de la zone d'incertitude comprise entre A et B, rendant ainsi possible un diagnostic efficace.

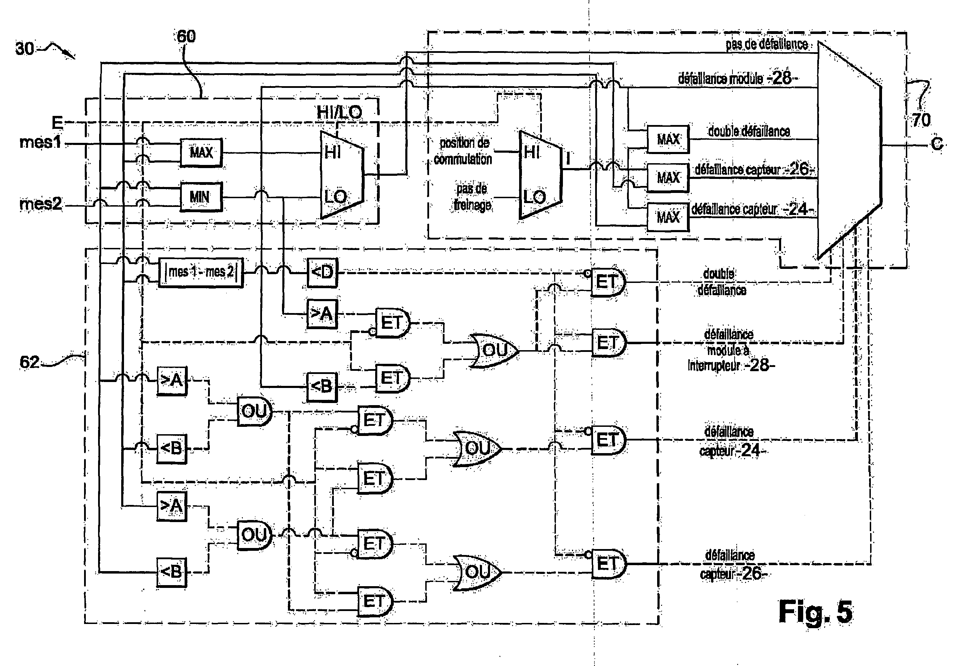

Un troisième mode de réalisation de l'unité 30 de consigne est illustré à la figure 5. Ce mode de réalisation comporte un module 60 de génération de consigne et un module 62 de diagnostic identiques à ceux du deuxième mode de réalisation décrit en relation avec la figure 4.

Dans ce mode de réalisation, le module 60 de génération de consigne est complété par un module 70 qui génère des consignes de freinage selon des modes dégradés lorsque des défaillances des capteurs 24, 26 et du module à interrupteur 28 sont diagnostiqués par le module 62.

Le module 70 met en oeuvre la stratégie suivante de génération de consigne en modes dégradés.

Si aucune défaillance n'est diagnostiquée par le module 62, le module 70 sélectionne, comme consigne de freinage C, la consigne produite par le module 60.

Si une défaillance du module à interrupteur 28 est diagnostiquée par le module 62, le module 70 sélectionne comme consigne de freinage le maximum des mesures mes1, mes2 des capteurs 24, 26.

Tant qu'aucun des capteurs 24, 26 n'est défaillant, les mesures de ceux-ci sont sensiblement égales (c'est-à-dire comprises dans le gabarit G1) et on obtient ainsi une mesure fiable de la position de la pédale. Par contre, si un des capteurs est défaillant, la sélection du maximum des mesures induit dans le pire des cas un sur-freinage, sur-freinage préférable à un sous-freinage du point de vue de la sécurité. En outre, le conducteur est déjà alerté d'une défaillance du système de mesure de la position de la pédale de frein en raison du diagnostic émis par le module 62 lors de la détection de la défaillance du module à interrupteur 28. Ainsi, le cas d'une défaillance ultérieure d'un des deux 24, 28 capteurs est peu probable entre le moment de l'émission par le module 62 de la défaillance du module à interrupteur 28 et le moment où le conducteur envoie son véhicule en réparation.

Si une défaillance d'un seul des capteurs 24, 26 est diagnostiqué par le module 62, le module 70 sélectionne, comme consigne de freinage C, le maximum entre la mesure du capteur non défaillant et une valeur 1 égale à la valeur 0 si le module à interrupteur 28 indique une position de pédale « peu ou pas appuyée » ou égale à la position de commutation si le module à interrupteur 28 indique une position de pédale « très appuyée ».

Ainsi, tant qu'il n'y a pas d'autre défaillance, la consigne de freinage C suit la mesure du capteur non défaillant qui est dans tous les cas supérieure ou égale à la valeur « I ».

Par ailleurs, si ultérieurement le capteur sain devient également défaillant en voyant sa mesure se figer sur une valeur inférieure « J » à la position de commutation, la consigne de freinage C commute alors entre la valeur J sur laquelle s'est figée la mesure du capteur et la position de commutation du module à interrupteur 28. Ceci permet donc de toujours répondre à une demande de freinage par une consigne de freinage acceptable en fonction de la valeur de la position de commutation. Par ailleurs, consécutivement à un relâchement de la pédale de frein, il subsiste un freinage résiduel correspondant à la valeur J, qui est maîtrisable par le conducteur en usant de la fonction d'accélération du véhicule, réflexe généralement observé en cas de freinage résiduel. On notera ainsi qu'en cas d'une double défaillance des capteurs de position 24, 26, un niveau de sécurité élevé est conservé. En outre, le conducteur est déjà averti d'une défaillance du système de mesure à la suite du diagnostic de la première défaillance constatée sur les capteurs.

De manière analogue, si le capteur sain devient également défaillant en voyant sa mesure se figer sur une valeur « K » supérieure à la position de commutation du module à interrupteur 28, la consigne de freinage C se figera également sur la valeur K, indépendamment de l'état du module à interrupteur 28, induisant dans le pire des cas un sur-freinage, toujours préférable à un sous-freinage du point de vue de la sécurité. En outre, le conducteur est déjà averti d'une défaillance.

Si une double défaillance ou une incohérence totale entre les signaux délivrés par les capteurs 24, 26 et le module à interrupteur 28 est diagnostiquée par le module 62, le module 70 sélectionne pour la consigne de freinage C le maximum des mesures des capteurs 24, 26 et de la valeur I définie ci-dessus.

Ainsi, si la double défaillance concerne l'un des capteurs et le module à interrupteur 28, une demande de freinage élevée, comme un freinage d'urgence par exemple, de la part du conducteur est toujours satisfaite par la mesure du capteur sain qui est alors sélectionnée en tant que consigne de freinage C.

Si la double défaillance concerne les deux capteurs 24, 26 et que leurs mesures se figent à des valeurs inférieures à la position de commutation, la consigne de freinage C commute alors entre la maximum des mesures des capteurs et de la position de commutation. Ceci permet donc de toujours répondre à une demande de freinage avec un niveau acceptable en fonction de la valeur de la position de commutation.

Si la double défaillance concerne les deux capteurs 24, 26 et que leurs mesures se figent à des valeurs supérieures à la position de commutation, la consigne de freinage se fige alors sur le maximum de ces valeurs, indépendamment de l'état du module à interrupteur 28. Au pire des cas, il existe donc un sur-freinage, toujours préférable à un sous-freinage pour des questions de sécurité.

Ainsi, on notera que quelque soit la double défaillance constatée, cas extrêmement rare, y compris une défaillance simultanée des deux capteurs, une consigne de freinage, au minimum égale à la position de commutation du module à interrupteur 28, est générée. Ceci est toujours préférable à une consigne de freinage nulle synonyme d'absence de freinage.

Dans les modes de réalisation venant d'être décrits, il a été considéré des capteurs de position de la pédale de frein.

En variante, tout type de capteurs peut être utilisé de moment qu'il délivre une mesure monotone et continue directement liée à la position de la pédale de frein. De même, les deux capteurs peuvent être de nature différente (par exemple un capteur d'effort et un capteur de course d'enfoncement de la pédale) moyennant l'utilisation d'une mise en forme des mesures délivrées par ceux-ci afin d'obtenir des valeurs comparables.

De même, il a été décrit un module à interrupteur. On comprendra que tout type d'organes apte à présenter deux états en fonction de la position de la pédale de frein, ou de la course d'enfoncement, de l'effort exercé sur la pédale, etc... convient.

Par ailleurs, il a été décrit un système de génération de consigne de freinage à partir de mesure sur la pédale de frein d'un véhicule automobile.

On comprendra que l'invention s'applique également à la génération d'une consigne d'accélération en fonction de mesure sur la pédale d'accélération. La logique de génération est alors de préférence inversée. Alors que l'on considère dans le cas du freinage une logique privilégiant un sur-freinage, on considère dans le cas de l'accélération une logique privilégiant une sous-accélération. Dans une telle application, les fonctions de sélection par le maximum sont remplacées par des fonctions de sélection par le minimum.

## Revendications

1. Système de détermination d'une consigne associée à la position d'une pédale (22) d'un véhicule automobile (10), du type comportant deux capteurs (24, 26) mesurant chacun une grandeur associée à ladite position, ledit système comportant des moyens (28) commutant entre des premier et second états sur une position de commutation prédéterminée de la pédale (22) ; et des moyens (60 ; 70) de génération de la consigne en fonction des mesures des deux capteurs et de l'état courant des moyens commutant, les moyens (60 ; 70) de génération étant aphtes à sélectionner la mesure correspondant à la plus petite des positions de pédale lorsque les moyens commutant (28) sont dans leur premier état, et la mesure correspondant à la plus grande des positions de pédale lorsque les moyens commutant (28) sont dans leur second état, ***caractérisé* en ce qu'**il comporte en outre des moyens (62) de diagnostic de l'état de fonctionnement des deux capteurs (24, 26) et des moyens commutant (28) en fonction de signaux délivrés par ceux-ci, lesdits moyens (62) de diagnostic étant aptes à diagnostiquer un capteur (24, 26) défaillant et que lui seul est défaillant si à la fois :
■ l'écart entre les positions correspondant aux mesures des deux capteurs est supérieur à une première valeur de seuil prédéterminée ; et
■ lorsque les moyens de commutation sont dans leur état indiquant une position de pédale supérieure à la position de commutation, la position correspondant à la mesure du capteur est inférieure à la position de commutation d'au moins une seconde valeur de seuil prédéterminée et la position correspondant à la mesure de l'autre capteur est supérieure à la position de commutation d'au moins une troisième valeur de seuil prédéterminée, ou, lorsque les moyens de commutation sont dans leur état indiquant une position de pédale inférieure à la position de commutation, la position correspondant à la mesure du capteur est supérieure à la position de commutation d'au moins la troisième valeur de seul prédéterminée et la position correspondant à la mesure de l'autre capteur est inférieure à la position de commutation d'au moins la seconde valeur de seuil prédéterminée.

2. Système selon la revendication 1, ***caractérisé* en ce que** la pédale (22) est une pédale de frein, et **en ce que** le premier état est activé pour des positions de pédale inférieures à la position de commutation, et le second état est activé pour des positions de pédale supérieures à la position de commutation.

3. Système selon la revendication 1 ou 2, ***caractérisé* en ce que** les moyens (62) de diagnostic sont aptes à diagnostiquer que les moyens commutant (28) sont défaillants et que eux seuls sont défaillants si à la fois :
■ l'écart entre les positions correspondant aux mesures des deux capteurs est inférieur à une première valeur de seuil prédéterminée ; et
■ lorsque les moyens de commutation sont dans leur état indiquant une position de pédale supérieure à la position de commutation, les positions correspondant aux mesures des capteurs sont inférieures à la position de commutation d'au moins une seconde valeur de seuil prédéterminée, ou, lorsque les moyens de commutation sont dans leur état indiquant une position de pédale inférieure à la position de commutation, les positions correspondants aux mesures des capteurs sont supérieures à la position de commutation d'au moins une troisième valeur de seuil prédéterminée.

4. Système selon la revendication 1 ou 3, **caractérisé en ce que** les moyens (62) de diagnostic sont aptes à diagnostiquer une double défaillance ou une incohérence totale entre les signaux délivrés par les capteurs (24, 26) et les moyens commutant (28) si à la fois :
■ l'écart entre les positions correspondant aux mesures des deux capteurs est supérieur à une première valeur de seuil prédéterminé ; et
■ lorsque les moyens de commutation sont dans leur état indiquant une position de pédale supérieure à la position de commutation, les positions correspondant aux mesures des capteurs sont inférieures à la position de commutation d'au moins une seconde valeur de seuil prédéterminée, ou, lorsque les moyens de commutation sont dans leur état indiquant une position de pédale inférieure à la position de commutation, les positions correspondants aux mesures des capteurs sont supérieures à la position de commutation d'au moins une troisième valeur de seuil prédéterminée.

5. Système selon l'une quelconque des revendications précédentes, ***caractérisé* en ce que** les moyens (70) de génération de consigne sont aptes à déclencher des modes dégradés de consigne en cas de défaillance des capteurs (24, 26) et des moyens commutant (28).

6. Système selon les revendications 1 et 5, ***caractérisé* en ce que** la pédale (22) est une pédale de frein, et **en ce que** lorsque seul un capteur est diagnostiqué comme étant défaillant, les moyens de génération de consigne sont aptes à sélectionner le maximum entre la position correspondant à la mesure de l'autre capteur et la position de commutation.

7. Système selon les revendications 3 et 5, ***caractérisé* en ce que** la pédale (22) est une pédale de frein, et **en ce que** lorsque seuls les moyens commutant sont diagnostiqués comme étant défaillants, les moyens de génération sont aptes à sélectionner le maximum des positions correspondant aux mesures des deux capteurs.

8. Système selon les revendications 4 et 5, ***caractérisé* en ce que** la pédale (22) est une pédale de frein, et **en ce que** lorsqu'au moins deux éléments parmi les moyens commutant et les deux capteurs sont diagnostiqués comme étant défaillants, les moyens de génération de consigne sont aptes à sélectionner le maximum entre les positions correspondant aux mesures des deux capteurs et la position de commutation.

## Patentansprüche

1. System zur Bestimmung eines der Stellung eines Pedals (22) eines Kraftfahrzeugs (10) zugeordneten Sollwerts, von der Art mit zwei Sensoren (24, 26), die je eine der Stellung zugeordnete Größe messen, wobei das System Einrichtungen (28), die zwischen ersten und zweiten Zuständen auf eine vorbestimmte Schaltstellung des Pedals (22) schalten, und Einrichtungen (60; 70) zur Erzeugung des Sollwerts abhängig von den Messungen der zwei Sensoren und vom laufenden Zustand der Schalteinrichtungen aufweist, wobei die Erzeugungseinrichtungen (60; 70) den der kleinsten Pedalstellung entsprechenden Messwert, wenn die Schalteinrichtungen (28) in ihrem ersten Zustand sind, und den der größten Pedalstellung entsprechenden Messwert auswählen können, wenn die Schalteinrichtungen (28) in ihrem zweiten Zustand sind, **dadurch gekennzeichnet, dass** es außerdem Einrichtungen (62) zur Diagnose des Betriebszustands der zwei Sensoren (24,26) und der Schalteinrichtungen (28) abhängig von von diesen gelieferten Signalen aufweist, wobei die Diagnoseeinrichtungen (62) einen ausgefallenen Sensor (24, 26), und dass nur dieser ausgefallen ist, diagnostizieren können, wenn gleichzeitig:
• die Abweichung zwischen den den Messungen der zwei Sensoren entsprechenden Stellungen größer als ein erster vorbestimmter Schwellwert ist; und
• wenn die Schalteinrichtungen in ihrem Zustand sind, der eine Pedalstellung höher als die Schaltstellung anzeigt, die der Messung des Sensors entsprechende Stellung um mindestens einen zweiten vorbestimmten Schwellwert niedriger als die Schaltstellung ist, und die der Messung des anderen Sensors entsprechende Stellung um mindestens einen dritten vorbestimmten Schwellwert höher als die Schaltstellung ist, oder wenn die Schalteinrichtungen in ihrem Zustand sind, der eine Pedalstellung niedriger als die Schaltstellung anzeigt, die der Messung des Sensors entsprechende Stellung um mindestens den dritten vorbestimmten Schwellwert höher ist als die Schaltstellung, und die der Messung des anderen Sensors entsprechende Stellung um mindestens des zweiten vorbestimmten Schwellwerts niedriger als die Schaltstellung ist.

2. System nach Anspruch 1, **dadurch gekennzeichnet, dass** das Pedal (22) ein Bremspedal ist, und dass der erste Zustand für Pedalstellungen aktiviert wird, die niedriger sind als die Schaltstellung, und der zweite Zustand für Pedalstellungen aktiviert wird, die höher sind als die Schaltstellung.

3. System nach Anspruch 1 oder 2, **dadurch gekennzeichnet, dass** die Diagnoseeinrichtungen (62) diagnostizieren können, dass die Schalteinrichtungen (28) ausgefallen sind, und dass nur sie ausgefallen sind, wenn gleichzeitig:
• die Abweichung zwischen den den Messungen der zwei Sensoren entsprechenden Stellungen kleiner als ein erster vorherbestimmter Schwellwert ist; und
• wenn die Schalteinrichtungen in ihrem Zustand sind, der eine Pedalstellung höher als die Schaltstellung anzeigt, die den Messungen der Sensoren entsprechenden Stellungen um mindestens einen zweiten vorbestimmten Schwellwert niedriger als die Schaltstellung sind, oder wenn die Schalteinrichtungen in ihrem Zustand sind, der eine Pedalstellung niedriger als die Schaltstellung anzeigt, die den Messungen der Sensoren entsprechenden Stellungen um mindestens einen dritten vorbestimmten Schwellwert höher als die Schaltstellung sind.

4. System nach Anspruch 1 oder 3, **dadurch gekennzeichnet, dass** die Diagnoseeinrichtungen (62) einen doppelten Ausfall oder eine vollständige Inkohärenz zwischen den von den Sensoren (24, 26) und den Schalteinrichtungen (28) gelieferten Signalen diagnostizieren können, wenn gleichzeitig:
• die Abweichung zwischen den den Messungen der zwei Sensoren entsprechenden Stellungen größer als ein erster vorbestimmter Schwellwert ist; und
• wenn die Schalteinrichtungen in ihrem Zustand sind, der eine Pedalstellung höher als die Schaltstellung anzeigt, die Stellungen entsprechend den Messungen der Sensoren um mindestens einen zweiten vorbestimmen Schwellwert niedriger als die Schaltstellung sind, oder wenn die Schalteinrichtungen in ihrem Zustand sind, der eine Pedalstellung niedriger als die Schaltstellung anzeigt, die den Messungen der Sensoren entsprechenden Stellungen um mindestens einen dritten vorbestimmten Schwellwert höher als die Schaltstellung sind.

5. System nach einem der vorhergehenden Ansprüche, **dadurch gekennzeichnet, dass** die Sollwert-Erzeugungseinrichtungen (70) bei Ausfall der Sensoren (24, 26) und der Schalteinrichtungen (28) Notbetriebe auslösen können.

6. System nach den Ansprüchen 1 und 5, **dadurch gekennzeichnet, dass** das Pedal (22) ein Bremspedal ist, und dass, wenn nur ein Sensor als ausgefallen diagnostiziert wird, die Sollwert-Erzeugungseinrichtungen den Höchstwert zwischen der der Messung des anderen Sensors entsprechenden Stellung und der Schaltstellung auswählen können.

7. System nach den Ansprüchen 3 und 5, **dadurch gekennzeichnet, dass** das Pedal (22) ein Bremspedal ist, und dass, wenn nur die Schalteinrichtungen als ausgefallen diagnostiziert werden, die Erzeugungseinrichtungen den Höchstwert der den Messungen der zwei Sensoren entsprechenden Stellungen auswählen können.

8. System nach den Ansprüche 4 und 5, **dadurch gekennzeichnet, dass** das Pedal (22) ein Bremspedal ist, und dass, wenn mindestens zwei Elemente unter den Schalteinrichtungen und den zwei Sensoren als ausgefallen diagnostiziert werden, die Sollwert-Erzeugungseinrichtungen den Höchstwert zwischen den den Messungen der zwei Sensoren entsprechenden Stellungen und der Schaltstellung auswählen können.

## Claims

1. System for determining a setpoint associated with the position of a pedal (22) of an automobile (10), of the type comprising two sensors (24, 26), each measuring a quantity associated with said position, said system comprising means (28) switching between first and second states on a predetermined switching position of the pedal (22); and means (60; 70) of generating the setpoint as a function of the measurements from the two sensors and of the current state of the switching means, the generation means (60; 70) being suitable for selecting the measurement corresponding to the smallest of the pedal positions when the switching means (28) are in their first state, and the measurement corresponding to the greatest of the pedal positions when the switching means (28) are in their second state, ***characterized* in that** it also comprises means (62) of diagnosing the operating state of the two sensors (24, 26) and of the switching means (28) according to signals delivered by the latter, the diagnosis means (62) being suitable for diagnosing a failed sensor (24, 26) and that only it has failed if both:
■ the deviation between the positions corresponding to the measurements from the two sensors is above a predetermined first threshold value; and
■ when the switching means are in their state indicating a pedal position above the switching position, the position corresponding to the measurement from the sensor is below the switching position by at least a predetermined second threshold value and the position corresponding to the measurement from the other sensor is above the switching position by at least a predetermined third threshold value or, when the switching means are in their state indicating a pedal position below the switching position, the position corresponding to the measurement from the sensor is above the switching position by at least the predetermined third threshold value and the position corresponding to the measurement from the other sensor is below the switching position by at least the predetermined second threshold value.

2. System according to Claim 1, ***characterized* in that** the pedal (22) is a brake pedal, and **in that** the first state is activated for pedal positions below the switching position, and the second state is activated for pedal positions above the switching position.

3. System according to Claim 1 or 2, ***characterized* in that** the diagnosis means (62) are suitable for diagnosing that the switching means (28) have failed and that only they have failed if both:
■ the deviation between the positions corresponding to the measurements from the two sensors is below a predetermined first threshold value; and
■ when the switching means are in their state indicating a pedal position above the switching position, the positions corresponding to the measurements from the sensors are below the switching position by at least a predetermined second threshold value, or, when the switching means are in their state indicating a pedal position below the switching position, the positions corresponding to the measurements from the sensors are above the switching position by at least a predetermined third threshold value.

4. System according to Claim 1 or 3, ***characterized* in that** the diagnosis means (62) are suitable for diagnosing a double failure or a total inconsistency between the signals delivered by the sensors (24, 26) and the switching means (28) if both:
■ the deviation between the positions corresponding to the measurements from the two sensors is above a predetermined first threshold value; and
■ when the switching means are in their state indicating a pedal position above the switching position, the positions corresponding to the measurements from the sensors are below the switching position by at least a predetermined second threshold value, or, when the switching means are in their state indicating a pedal position below the switching position, the positions corresponding to the measurements from the sensors are above the switching position by at least a predetermined third threshold value.

5. System according to any one of the preceding claims, ***characterized* in that** the setpoint generation means (70) are suitable for triggering setpoint degraded modes in the event of failure of the sensors (24, 26) and of the switching means (28).

6. System according to Claims 1 and 5, ***characterized* in that** the pedal (22) is a brake pedal, and **in that**, when only one sensor is diagnosed as having failed, the setpoint generation means are suitable for selecting the maximum between the position corresponding to the measurement from the other sensor and the switching position.

7. System according to Claims 3 and 5, ***characterized* in that** the pedal (22) is a brake pedal, and **in that** when only the switching means are diagnosed as having failed, the generation means are suitable for selecting the maximum of the positions corresponding to the measurements from the two sensors.

8. System according to Claims 4 and 5, ***characterized* in that** the pedal (22) is a brake pedal, and **in that**, when at least two elements out of the switching means and the two sensors are diagnosed as having failed, the setpoint generation means are suitable for selecting the maximum between the positions corresponding to the measurements from the two sensors and the switching position.
